# EUROPEAN PATENT SPECIFICATION

(11) **EP 3 555 765 B1**
(45) Date of publication and mention of the grant of the patent: **11.10.2023**
(21) Application number: 16820544.1
(22) Date of filing: 16.12.2016
(51) Int. Cl.: G06F 16/58, G06F 16/907

(54) **CONTENT SEARCH ENGINE**
INHALTSSUCHMASCHINE
MOTEUR DE RECHERCHE DE CONTENU

(43) Date of publication of application: 23.10.2019
(73) Proprietor: Google LLC, Mountain View, CA 94043 (US)
(72) Inventor: CHUNG, Sherk, Mountain View, California 94043 (US); SANDERS, Keith John, Mountain View, California 94043 (US); LIU, Yutung, Mountain View, California 94043 (US); SCUDDER, Jeffrey William, Mountain View, California 94043 (US); ZHOU, Jianwen, Mountain View, California 94043 (US)
(74) Representative: Morrall, Jonathan Ian McLachlan
(86) International application number: PCT/US2016/067384
(87) International publication number: WO 2018/111307

(56) References cited:
- WO-A1-2015/034767
- US-A1- 2006 161 541
- US-A1- 2010 131 541
- US-A1- 2011 055 683
- US-A1- 2014 344 664
- US-B1- 8 522 131
- US-B1- 8 977 653

## Description

### BACKGROUND

A search engine may generally be described as any program that executes a search and retrieves stored data. However, based on the task at hand, a search engine can be configured in a variety of different ways. For example, some search engines may be configured to perform keyword-based search and retrieval. Such search engines may identify relevant search results based, at least in part, on the number of times a search term appears in a particular resource, or the particular resource's metadata. Alternatively, or in addition, some search engines may identify search results as being responsive to a query because a resource provider paid the search engine provider a sum of money to return the provider's resource(s) in response to search queries that include a particular search term.

Yet other types of search engines may process queries for content to be displayed in addition to a primary set of internet search engine results. Such systems rely on the use of HTML web views for rendering of the content on a client device. However, HTML web views are problematic because they are asynchronous, CPU/RAM heavy, slow, and generally create user interface performance degradation on mobile applications.

US 2006/0161541 A1 relates to prefetching and caching query results. US 2011/0055683 A1 relates to page caching for rendering dynamic web pages.

### SUMMARY

This specification relates to a content search engine for retrieving unassembled content items and related program logic items that can be used to render the unassembled content items in native programming language of a mobile application.

The invention is defined by the independent claims. Developments of the invention are defined in the dependent claims.

According to one innovative aspect of the present disclosure, a method performed by a data processing system for providing content associated with an interactive user interface from a database that stores unassembled content items. The method may include actions of receiving, from an application program interface that is installed on a client device, a query for a content item to present in the application, identifying, based on a search of the database using the received query, an unassembled content item that is associated with (i) a program logic type and (ii) program logic modification tags, determining, based on the received query, whether the client device requires an updated copy of a program logic item that includes instructions for rendering an assembled version of the unassembled content item, and in response to determining that the client device requires an updated copy of the program logic item that includes instructions for rendering the assembled version of the unassembled content item: obtaining, based on the program logic type, a program logic item that includes instructions for rendering the assembled version of the unassembled content item, modifying the program logic item based on the program logic modification tags, and transmitting, to the application program interface, data that includes (i) the unassembled content item and (ii) the modified program logic that cause the client device to render an assembled version of the content item at the client device in a programming language of the application using the program logic.

Other aspects include corresponding systems, apparatus, and computer programs to perform the actions of methods defined by instructions encoded on computer storage devices.

These and other versions may optionally include one or more of the following features. For instance, in some implementations, the method may further include in response to determining that the client device does not require an updated copy of the program logic item that includes instructions for rendering the assembled version of the unassembled content item, transmitting, to the application program interface, data that includes the unassembled content item to be rendered into an assembled version of the content item at the client device in a programming language of the application using a copy of the program logic item cached locally on the client device.

In some implementations, the query may include (i) one or more keywords and (ii) context information. The context information may include a program logic item version identifier. The method may further comprise determining at least one attribute based upon the context information, wherein the at least one attribute is an attribute selected from the group consisting of: one or more attributes of the client device; one or more attributes of the mobile application installed on the client device; and one or more attributes of an operating system installed on the client device. The client device may render an assembled version of the content item based upon instructions provided in the modified program logic item.

In some implementations, modifying the program logic item based on the program logic modification tags may include enabling one or more attributes of the program logic item based on the program logic modification tags. Alternatively, or in addition, modifying the program logic item based on the program logic modification tags may include disabling one or more attributes of the program logic item based on the program logic modification tags.

In some implementations, the method may further include receiving, from the application programming interface that is installed on the client device, data that is indicative of a number of user interactions with the assembled version of the content item.

In some implementations, the program logic type may include a program logic identifier.

The subject matter described in this specification can be implemented in particular embodiments so as to realize one or more of the following advantages. The performance of a data processing system is improved by reducing latency in the display of content in an interactive user interface relative to systems not using the systems disclosed herein. Aspects of the present disclosure will also optimize the use of network bandwidth utilized to retrieve the content to be rendered from a remote server through the use of novel caching and rendering techniques. The content rendering techniques disclosed herein also utilized program logic items that are cached on a client device and dynamically modified to render cached content in a way that reduces the amount of CPU processing, RAM usage, and other system resources required to render content on the user interface of an application installed on a client device. The unassembled content items and program logic items may be provided dynamically based upon a query from a client device and the display environment in which the content is to be displayed is rendered in a native programming language of a mobile application on the client device to provide a dynamic user interface.

### BRIEF DESCRIPTION OF THE DRAWINGS

FIG. 1 is a contextual block diagram of a content search and rendering system.
FIG. 2 is a flowchart of a process of using a content search engine to retrieve unassembled content.
FIG. 3 is a flowchart of a process for using a client device to render unassembled content using program logic.

### DETAILED DESCRIPTION

Aspects of the present disclosure are directed towards methods, systems, and apparatus, including computer programs encoded on computer storage medium, for searching and rendering unassembled content items for display in a set of search results provided via a user interface of a mobile application installed on a client device. Generally, a content item includes content that can be displayed in association with one or more search results, including, for example, text content, image content, video content, or a combination thereof. Generally, an unassembled content item includes pre-rendered content, including, for example, a content item stored in binary blob format. The mobile application natively renders unassembled content items stored in a local client cache using the native programming language of the mobile application (e.g., C, Objective-C, C++, Java, or the like). Natively rendering the cached content includes assembling unassembled content stored in a local cache using a program logic item that is also cached on the client device. Generally, a program logic item includes, for example, instructions that can be processed by a client device to render an assembled version of the unassembled content item.

The present disclosure uses native rendering of cached unassembled content items and program logic items retrieved from a content server to provide an improvement to conventional systems that rely on HTML to create web views for such content rendering. Such HTML web views are problematic because they are asynchronous, CPU/RAM heavy, slow, and generally create user interface performance degradation on mobile apps. This problem is solved using the rendering techniques described herein. By requiring retrieval of the unassembled content items and the program logic items from a content server (as opposed to having the native rendering of content items pre-coded into the mobile application itself), the present disclosure achieves native rendering of content items in a way that allows content providers and system operators the opportunity to maintain control over the rendering of content on the client device. The content providers and system operators maintain control over the rendering of content items on the client device by providing program logic items for download that describe how unassembled content items should be assembled during rendering of the unassembled content item using the native programming language of mobile application installed on the client device.

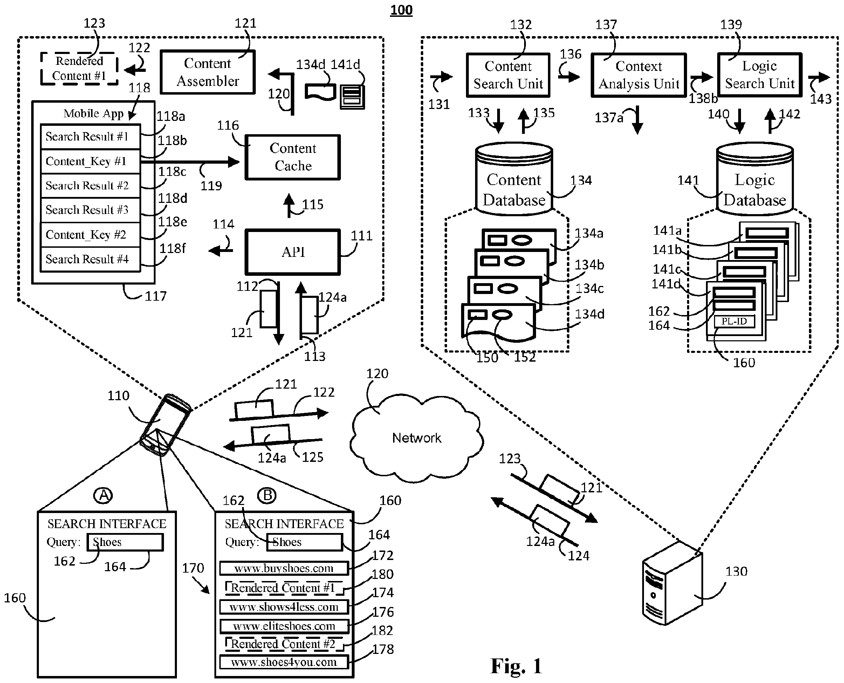

FIG. 1 is a contextual block diagram of a content search and rendering system 100. The content search and rendering system 100 includes at least one client device 110, a network 120, and at least one server 130. The client device 110 may include, for example, a smartphone, a smartwatch, a table, a laptop, a desktop, or the like. The network 120 may include, for example, one or more of a LAN, a WAN, a cellular network, the Internet, or the like. The server 130 may include one or more back end server computers.

In one implementation, the content search and rendering system 100 can be used to retrieve and render content in response to a search query. For example, at stage A, a user of client device 110 can input one or more search terms 162 such as the search term "Shoes" into a query input box 164 provided via a graphical user interface 160 of an application that is running on the client device 110. After entering the search terms 162, a user of the client device 110 may submit a command that instructs the client device 110 to initiate a search based on the search terms 162.

An application programming interface (API) 111 installed on the client device 110 is configured to receive the one or more search terms 162 and generate 112 a query 121 that includes the one or more search terms 162 and context information. The context information may include, for example, (i) an identifier of the application that is installed on the client device and used to input the query, (ii) a version of the application that is installed on the client device and used to input the query, (iii) an API version that is installed on the client device and used to generate the query, transmit the query, or both, (v) one or more client device settings, (vi) a client device version, (vii) a location of the client device, (viii) whether the client device is moving, (ix) one or more program logic versions cached by the client device, (x) or a combination thereof. In some implementations, the API 111 may encode the query 121 into an encrypted token. The encrypted token may include, for example, a hashed set of one or more the search terms and the context information. The client device may transmit 122 the generated query 121 to the server 130 via the network 120.

The server 130 receives 123, and processes, the query 121. If the query 121 was encoded into an encrypted token, the server 130 can decrypt the encrypted token. Processing of the query 121 may begin by the server 130 providing the query 121 as an input 131 to the content search unit 132. The content search unit 132 can obtain the keywords included in query 121 and initiate a search 133 of the content database 134. Alternatively, or in addition, the content search unit 132 may, instead of searching a database of content items such as a content database 134, search an index that includes references to unassembled content items that are stored on a server at a different location than the server 130 that stores the content search unit 132. Accordingly, the content search unit 132 may receive 135 search results that identify a set of one or more unassembled content items that are responsive to the search 133.

The search 133 of content database 134 by content search unit 132 is an attempt to identify unassembled content items based on one or more search terms of query 121. Then, the one or more unassembled content items identified by the search can be made available for download by the client device 110, as described below. The downloaded, unassembled content items can then be rendered by the client device 110 using a native programming language of the mobile application 117 installed on the client device 110, as described herein, and provided for display on a graphical user interface 160 at stage B as an assembled content item such as assembled content items 180, 182.

Separately, however, the mobile application 117, the server 130, or the like may initiate a search for internet search results that may be provided to the client device based on the one or more search terms 162. Such internet search results may be returned to the client device 110, and then provided for display via the display 160 at stage B as internet search results 172, 174, 176, 178, as described herein. Accordingly, the processes described herein relates to search, retrieval, and rendering of unassembled content items separate from, and in addition to, search, retrieval, and rendering of internet search results.

The content database 134 may be located on the same server as the content search unit 132, context analysis unit 137, logic search unit 139, logic database 141, or a combination thereof. Alternatively, the content database 134 may be located on a different server than the content search unit 132, context analysis unit 137, logic search unit 139, logic database 147, or a combination thereof. The content database 134 may include a plurality of unassembled content items such as unassembled content items 134a, 134b, 134c, 134d. An unassembled content item such as unassembled content items 134a, 134b, 134c, 134d may include, for example, a binary blob format. Alternatively, unassembled content items may include any content item of any format prior to the use of program logic that is used to render the content item on a graphical interface of an application. The unassembled content items may include images, videos, or the like. In some implementations, the unassembled content items may include advertisements.

The content search unit 132 may identify one or more unassembled content items such as unassembled content items 134c, 134d that are responsive to the obtained keywords. For example, a set of identified unassembled content items may be returned 135 to the content search unit 132 in response to the search 133 of the content database 134. The set of identified unassembled content items returned 135 may include a set of one or more actual content items. Alternatively, the set of identified unassembled content items may include a set one or more references that each refer to a respective unassembled content item.

Each respective unassembled content item 134a, 134b, 134c, 134d, or each respective reference thereto, may be associated with a program logic type 150. The program logic type 150 may include, for example, a program logic identifier. The program logic identifier may include, for example, data that identifies a particular program logic item that can be used to render the unassembled content item. In addition, each respective unassembled content item 134a, 134b, 134c, 134d, or each respective reference thereto, may be associated with one or more program logic modification tags 152. A program logic modification tag 152 may include data that enables or disables (e.g., ignores) an attribute of a program logic item such as program logic items 141a, 141b, 141c, 141d. Alternatively, or in addition, a program logic modification tag 152 may include data that sets an attribute of a program logic item such as program logic items 141a, 141b, 141c, 141d to a particular value, setting, or state.

A content provider may use the program logic modification tags 152 to control the manner in which the unassembled content item will be rendered by a content assembler 121. This is because the program logic modification tags 152 can be used to dynamically customize a particular program logic item that will be used by the content assembler to 121 to render a related unassembled content item. For instance, a content provider may be able to control rendering attributes related to layout, style, actions, data binding definitions, and the like so that the content provider's content is rendered on the user interface of the mobile application installed on the client device 110 in a manner that is consistent with the way the content provider wants the content rendered.

In some implementations, the program logic modification tag can include an identifier that is shared between a field of an unassembled content item and a field of a program logic item. If the unassembled content item field associated with a particular program logic modification tag includes data, then the program logic item field that is also associated with the same program logic modification tag will be enabled (e.g., activated). Alternatively, however, if the unassembled content item field associated with a particular program logic modification tag does not include any data, then the program logic item field that is also associated with the same program logic modification tag may be disabled (e.g., ignored, hidden, or the like). Accordingly, the present disclosure facilitates disabling one or more attributes of a program logic item based on the presence of pieces of data present in an unassembled content item based on the program logic modification tags associated with program logic item.

The context analysis unit 137 may receive the query 121 from the content search unit 132. Alternatively, the context analysis unit 137 may receive the query 121 from another component of server 130. The context analysis unit may analyze the context associated with the query 121 to determine whether the client device that initiated the query 121 requires an updated copy of a program logic item that is required to render one or more unassembled content items identified in response to the search of the unassembled content database 134. In some implementations, the context of the query 121 may be indicative of one or more attributes of a current copy (e.g., current version) of a program logic item that is cached on the client device 110 that submitted the query 121. Alternatively, or in addition, the context of the query 121 may be indicative of one or more attributes of the client device 110, one or more attributes of the mobile application installed on the client device, one or more attributes of an operating system installed on the client device, or the like. Then, based on the analysis of the context of the query, the context analysis unit 137 may determine whether a search of the logic database 141 needs to be performed.

For instance, the context analysis unit 137 can determine, based on the context of the query 121, that the client device 110 is currently storing a cached copy of a program logic item that is required to render an unassembled content item that was identified as responsive to the query 121. In such instances, the context analysis unit 137 may terminate the search process based on the query 121 and then transmit 124 data 124a directly to the client device 110 that includes the unassembled content items responsive to the query 121. In such implementations, the server may transmit all unassembled content items responsive to the query to the client device 110 once execution of the query 121 is complete. Alternatively, the server 130 can incrementally transmit data to the client device 110 that includes unassembled content items in groups of two or more unassembled content items when executing a pre-fetch routine. This prefetch routine transmits data to the client device 110 that includes an initial group of unassembled content items that are responsive to the query 121, and then continues to execute the unassembled content item search query 121 in the background. This provides the advantage of letting a client device 110 receive the initial batch of unassembled content items and begin to render the initial batch of content items using the associated program logic item cached on the client device 110 while the server 130 completes execution of the content query 121 in the background. The data 124a transmitted 124 from the server 130 to the client 110 may be received 125 by the client device 110 and input 113 to the API 111.

Alternatively, the server 130 may terminate the search process and then transmit a search result message. The search result message may include a reference to a network location such as a uniform resource locator (URL) that provides the network location of a server computer that stores the unassembled content items. In such instances, the server 130 may transmit the search result message to the client device 110 which receives the search result message with the reference to the network location. The client device 110 may then provide the received search result message to an API 111. Upon receipt of a search result message, the application program interface may automatically retrieve only the unassembled content (and, in this instance, not the program logic item) from the network location identified by the reference (e.g., URL) in the search result message.

Thus, the context analysis unit 137 can improve performance by determining that it is sometimes unnecessary to (1) search for, (2) make available for download, and (3) have a client download one or more program logic items necessary to render an unassembled content item on the client device. Accordingly, this process can, in certain instances, reduce processing power necessary to search for a program logic item, reduce bandwidth necessary to transfer program logic over the network, and improve latency in rendering a content item on the graphical user interface of an application because the client device will not need to wait for the program logic to download prior to rendering the content, as the client device has a cached version of the program logic in these instances.

In other instances, however, the context analysis unit 137 can determine, based on the context of the query 121, that (i) the client device 110 does not currently store a cached version of the program logic item that is necessary to render the unassembled content that is responsive to the query (e.g., does not store the program logic item), (ii) the client device 110 currently stores a cached version of the program logic item that is necessary to render the unassembled content that is out of date (e.g., an outdated version of the program logic item), or (iii) the like. In such instances the context analysis unit 137 may instruct a program logic search unit 139 to search a program logic database to retrieve one or more program logic items that are necessary to render the one or more unassembled content items that were identified as being responsive to the query 121.

The program logic search unit 139 may initiate a search 140 of the program logic database 141. The program logic database 141 may include multiple program logic items such as program logic items 141a, 141b, 141c, 141d. The program logic items may be used to render unassembled content items on a user interface provided by a mobile application installed on the client device 110. Each program logic item may include a plurality of modifiable attributes. The modifiable attributes may include, for example, layout attributes, style attributes, actions, data binding definitions, and the like. Each respective modifiable attribute may be assigned a predetermined default value. Program logic items of particular types may be uniquely associated with one or more attributes based on the type of unassembled content the program logic item will be used to render. In some implementations, the default value may be determined by a system operator, content provider, or another party. The program logic items responsive to the search 140 may then be returned 142 to the program logic search unit 139.

The server 130 may then, for each retrieved program logic item, modify the modifiable attributes associated with each respective program logic item based on one or more program logic modification tags. For example, the server 130 may use the program logic type 150 that is associated with an unassembled content item 134d to create an association between the unassembled content item 134d and a particular program logic item having the same program logic identifier 160 such as program logic item 141d. Then the server 130 may use the one or more program logic modification tags 152 associated with the unassembled content item 134d in order to modify the one or more modifiable attributes 162, 164 of the program logic item 141d. Then program logic item 141d may be then be used by the content assembler to render the unassembled content item 134d as an assembled content item on the user interface provided by a mobile application installed on the client device 110 as specified by the program logic modification tags 152.

The program logic items provide an advantage to the operator of system 100 because the system operator can use the program logic items to ensure unassembled content is rendered on the client device 110 in a manner that satisfies the system operator. For example, the system operator can use the program logic items to ensure that unassembled content is rendered on a graphical user interface so that the rendered content such as "rendered content #1" 180 is strategically positioned on a particular portion of user interface 162 provided by the mobile application installed in the client device 110 without hindering the display of the search results such as search results 172 and 174.

Alternatively, or in addition, the program logic items can be used by the operator of a system 100 to ensure that unassembled content items are rendered in an appropriate way to satisfy obligations imposed on the operator of system 100 for display of content. For example, in certain instances where the unassembled content items include advertisements, certain legal restrictions may be imposed on the rendering of certain unassembled content items in an advertisement. For instance, ads for pharmaceutical products, tobacco products, alcohol products, and the like may have particular restrictions in the type of data that must be provided when displaying an advertisement of such products. Program logic items provide a system operator the ability to ensure that the system 100 complies with such restrictions.

The system 100 may dynamically use program modification tags and program logic templates to render unassembled content items. The system can use each of these respective features to ensure that a system operator complies with certain restrictions related to the display of content items while also allowing the content provider to maintain control over the rendering and display of content provider's content items. This balance of interests can be achieved by implementing the disclosed content search and rendering system that renders unassembled content items into an assembled content item using native application program code of the program running on the client device 110 to render unassembled content items while allowing both the content provider and system operator to maintain control over the rendering.

The search 140 of the logic database 141 may be based on a respective program logic type 150 that is associated with an unassembled content item that is identified as being responsive to the query 121. In some implementations, the program logic type 150 may include, for example, a program logic item identifier. Alternatively, or in addition, program logic type may include, for example, a category of program logic items. A category of program logic items may include, for example, shopping, pharmaceuticals, electronics, or the like. Then, the one or more program logic items 141a, 141b, 141c, 141d that were determined to be associated with a program logic type 160 may be identified as being required to render the unassembled content that is responsive to the query 121. Program logic items identified 142 in response to the search 140 may be made available to the client 110 for download. In some implementations, an index of program logic items may be searched, and the results 142 provided may include references to a network resource that stores the program logic items that are responsive to the program logic search 140.

In such instances, the server 130 can then transmit data 124a that includes (i) the unassembled content items and (ii) associated program logic items that are responsive to the query 121 directly to the client device 110. In such implementations, the server 130 may transmit data to the client device 110 that includes (i) all unassembled content items and (ii) all associated program logic items that are responsive to the query 121 to the client device 110 once execution of the query 121 is complete. Alternatively, the server 130 can incrementally transmit data to the client device 110 that includes (i) unassembled content items and (ii) associated program logic items in groups of two or more (i) unassembled content items and (ii) associated program logic items when executing a pre-fetch routine. This pre-fetch routine transmits data to the client device 110 that includes an initial group of (i) unassembled content items and (ii) program logic items that are responsive to the query 121, and then continues to execute the unassembled content item search query 121 in the background. This provides the advantage of letting a client device 110 receive the initial batch of (i) unassembled content items and (ii) associated program logic items and then begin to render the initial batch of unassembled content items using associated program logic items while the server 130 completes execution of the content query 121 in the background. The data 124a transmitted 124 from the server 130 to the client 110 in this example may similarly be received 125 by the client device 110 and input 113 to the API 111.

Alternatively, the server 130 may generate a search results message that includes a reference to the one or more unassembled content items that are identified as being responsive to the query 121 and the one or more program logic items that a client device needs in order to render the unassembled content items. In such instances, the server 130 may transmit the search result message to the client device 110 which receives the message with the reference to a network location. The client device 110 may provide the received search result message to an API 111. Upon receipt of a search result message, the API may automatically retrieve the unassembled content items and associated program logic items from the network location identified by the reference (e.g., URL) in the search result message. Then the client device 110 can download the unassembled content items and program logic items from the network location identified in the search result message via the network 120. The downloaded unassembled content items may be provided to the API.

An API 111 serves as a network interface to the server 130. The API may generate 112 the request for unassembled content items such as query 121, and then receive data from the server 130 that includes unassembled content items, program logic items, or both. Alternatively, the API may receive a search result message from the server 130 that includes a reference to a network location where the API can download one or more unassembled content items, one or more program logic items, or both, as necessary. In addition, the API may also receive one or more internet search results that are responsive to the query 121. The API may generate an identifier for each internet search result and each unassembled content item and use the respective identifiers to populate a search array 118 maintained by the application such as mobile application 117. Alternatively, the API may extract an identifier from each obtained internet search result and unassembled content item that can be used to populate the search result array 118. The API may cache 115 obtained unassembled content items, program logic items, or both in the content cache 116 either before, or after, populating the search result array 118 with identifiers.

The search result array 118 may define the order with which internet search results and rendered content items appear on the graphical user interface 160 at stage B. The search results array 118 may include a field for an identifier for each internet search result returned to the client device based on the one or more search terms 162 and each unassembled content item obtained in response to the query 121. For instance, in response to a search engine query executed based on the search term 162 "Shoes," the API 111 may have received at least 4 internet search results. In addition, the API 111, in response to the search query 121, may receive at least 2 unassembled content items. Identifiers for each of the internet search results are represented in FIG. 1 as "Search Result #1" 118a, "Search Result #2" 118c, Search Result #3" 118d, and "Search Result #4" 118f, respectively. For internet search results the identifier may include, for example, the network location (e.g., URL) associated with internet search result. Similarly, identifiers for each of the unassembled content item are represented in FIG. 1 as "Content_Key #1" 118b and "Content_Key #2" 118e, respectively. The ordering of the identifiers in the search result array 118 may be based on one or more ranking algorithms employed by the server 130, an internet search engine, the API 111, or a combination thereof.

The client device 111 may access a search array 118 maintained by a mobile application 117 to render the graphical user interface 160 at stage B using the native programming language of the mobile application 117. Rendering the graphical user interface 160 in the native programming language of the mobile application 117 includes, for example, rendering of the set of search results 170 using the same programming language that is used by the mobile application such as C, Objective-C, C++, Java, or the like.

When rendering the user interface 160, the client device 111 will access each entry in the search result array 118. If the entry is an internet search result, the client device 160 will generate a search result on the user interface 160. For instance, the client device can access the search result array 118, obtain the identifier associated with the internet search result (e.g., a URL), and provide the URL for display on the user interface 160. In accordance with this example, the client device may access the entry 118a in the search results array 118, obtain the internet search result identifier (e.g., URL), and then display an internet search result "www.buyshoes.com" 172 on the user interface 160.

If, however, the entry in the client device 160 is an identifier for an unassembled content item such as "Content_Key #1", the client device 160 may transmit 119 the identifier for the unassembled content identifier to the content cache 116 in an effort to retrieve the unassembled content item and program logic item that is associated with the unassembled content item that corresponds to the identifier "Content _Key #1." The content cache 116 may obtain the unassembled content item 134d and program logic item 141d associated with the unassembled content item, and provide 120 the unassembled content item 143d and the program logic item 141d to the content assembler 121.

The content assembler 121 renders the received unassembled content item 134d in a native programing language of the mobile application using the received program logic item 141d. Rendering of the unassembled content item 134d includes, e.g., formatting the unassembled content item based on the settings of one or more modifiable attributes of the program logic item. This includes, for example, modifying the style, layout, and actions associated with the unassembled content item as specified by the program logic item.

Moreover, the content assembler 121 uses the program logic item 141d to build a native view. For example, the content assembler 121 can use data binding definitions specified by the program logic item 141d to map the unassembled content item to the mobile application's 117 user interface elements. The defined native view results in the generation of a reusable data binding map that can be reused for other unassembled content items that use the same program logic item. With a view already established, additional unassembled content items can be rendered more efficiently, thereby reducing latency and reducing the potential for the appearance that rendering of an assembled content item produces a "pop-in" effect. The output 123 of the content assembler is a fully assembled content item based on the unassembled content item 134d that has been modified using the features set forth in the program logic item 141d that were defined by both the content provider and the operator of system 100, as described above. The client device may cycle through each entry in the search results array 118 and render each entry in the list of search results as described above.

During rendering and assembly of an unassembled content item by the content assembler 121, the content assembler 121 may assign one or more actions to the rendered assembled content item. The particular action assigned to any particular rendered and assembled content item such as rendered and assembled content item 180 is based on the action specified in the modifiable attributes of the program logic item used to render the content item. Actions may include, for example, actions on click, actions on hover, action on selection and hold for a predetermined amount of time, and the like. In one implementation, a rendered and assembled content item may be assigned the action of transmitting data to the server 130, computer controlled by a content provider, a computer controlled by the operator of system 100, or the like indicating that the rendered and assembled. content item has been selected. Each instance of such transmitted data may be aggregated, over time, by the server 130, the computer controlled by the content provider, the computer controlled by the operator of system 100, or the like. This aggregated number of transactions may provide an indication the level of user interaction with the rendered and assembled content item.

The output 123 of the content assembler 121 is a fully assembled content item based on the unassembled content item 134d that has been modified using the features set forth in the program logic item 141d that may be defined by the content provider, the operator of system 100, or both, as described above. The client device may cycle through each entry in the search results array 118 and render each entry in the list of search results as described above.

A user may interact with the list of search results 170 that include internet search results and rendered assembled content items provided via the graphical user interface 160 of a mobile application 117 by scrolling through search results 170. Though portions of the list of search results 170 will scroll out of the display of the client device 110 and new portions of the list of search results will scroll onto the display of the client device, the original order of internet search results will be preserved using the search results array 118. The mobile application 117 will initiate rendering of unassembled content items, as necessary, by using respective content identifier encountered in the search result array 118 to retrieve unassembled content items and associated program logic from the cache 116, and then use the content assembler 151 to natively render the respective unassembled content items using their associated program logic item. In some instances, in addition to performance gains achieved using the cache, additional performance gains may be achieved by using reusable views.

In the system 100, the system is described as facilitating communication directly between the client device 110 and the server 130 via the network 120. However, the present disclosure need not be so limited. For instance, in some implementation, a third party provider of the mobile application 117 may require that queries from the API 111 associated with the mobile application 117 be transmitted through a server of the mobile application provider using one or more networks, as necessary. In such instances, the query 121 may be transmitted to a third party server of the third party mobile application provider, and then the third party mobile application provider may forward the query 121 to the server 130. Next, the third party mobile application provider may receive unassembled content items, program logic items, or both from the server 130, and then forward the received unassembled content items, program logic items, or both to the client device 110. Alternatively, the search results message from the server 130, and then forward the search result message to the client device 110.

In such an alternative implementation, the client device 110 and the server 130 generally perform the same operations as described above and below. However, this alternative implementation allows the third party server of the third party mobile application provider with the ability to augment the internet search results (but not the unassembled content item search results). Thus, in such an implementation, the third party mobile provider may intercept the query 121, decrypt the query 121 (if necessary), and then perform an additional search using one or more search terms included in the query 121. Then, the search results can be returned to the client device 110 using the methods described above (e.g., either directly or indirectly via a search result message), and be used, along with the search engine search results and unassembled content items, to populate the search results array as described above with respect to internet search results.

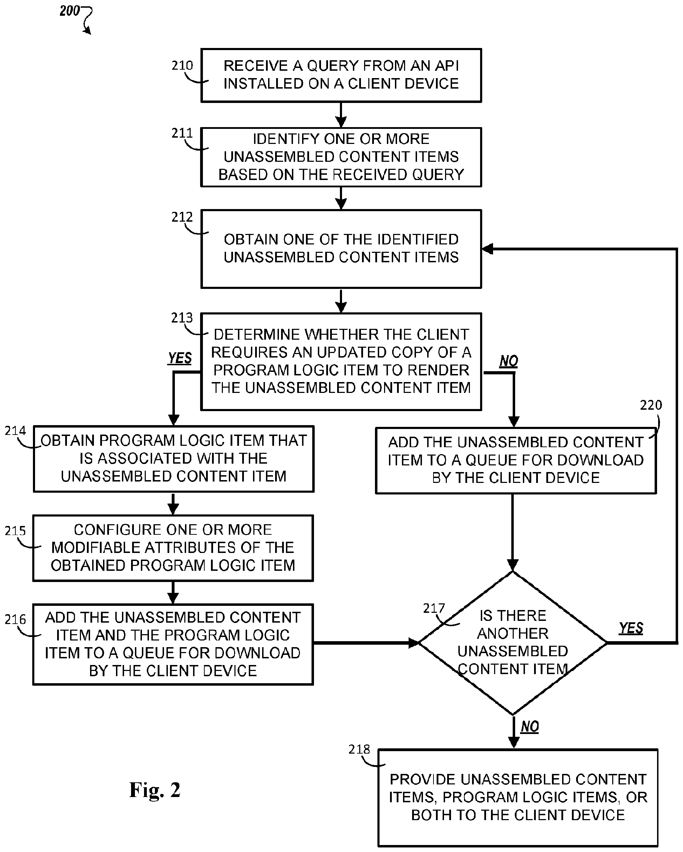

FIG. 2 is a flowchart of a process 200 for using a content search engine to retrieve unassembled content. The process 200 will be described as being performed by a system of one or more computers such as the content search and rendering system 100 depicted in FIG. 1.

The system receives 210 a query from an application programming interface installed on a client device. The query may include, for example, one or more search terms and context information. The context information may include, for example, (i) an identifier of the application that is installed on the client device and used to input the query, (ii) a version of the application that is installed on the client device and used to input the query, (iii) an API version that is installed on the client device and used to generate the query, transmit the query, or both, (v) one or more client device settings, (vi) a client device version, (vii) a location of the client device, (viii) whether the client device is moving, (ix) one or more program logic versions cached by the client device, (x) or a combination thereof. In some implementations, the received query may be in the form of an encrypted token. The encrypted token may be generated using a hash algorithm. The system can decrypt the encrypted token upon receipt of the token.

The system identifies 211 one or more unassembled content items based on the received query. For example, the system may perform a search of a content item database using one or more keywords included in the received query. The content items stored in the content item database may be in binary blob format. Alternatively, unassembled content items may include any content item of any format prior to using a program logic item to render the content item on a graphical interface of a mobile application. The unassembled content items may include images, videos, or the like.

In one implementation, the content item database may include content items uploaded by a content provider. For example, the content items may include one or more advertisements. The search of the content item database is not a search for internet search results that are responsive to the query. Instead, the system may separately perform a separate search using an internet search engine in addition to the search of the content item database in order to identify search results that are responsive to the query.

Each unassembled content item stored in, or retrieved from, the content item database is associated with at least a program logic type. The program logic type may include, for example, a program logic identifier. The program logic identifier may include, for example, data that identifies a particular set of program logic that can be used to render an associated unassembled content item. In addition, each unassembled content item stored in, or retrieved from, the content item database may also be associated with one or more program logic modification tags. A program logic modification tag may include data that enables or disables an attribute of a program logic item. Alternatively, or in addition, a program logic modification tag may include data that sets a value of an attribute of a program logic item to a particular value, setting, or state. If an unassembled content item is not associated with a program logic modification tag, then the system will use the default settings of the modifiable attributes of the program logic item that is associated with the unassembled content item. At stage 212 the system obtains one of the unassembled content items identified at stage 211.

The system determines 213 whether the client device requires an updated copy of a program logic item that is required by the client device to render the unassembled content item. Determining whether the client device requires an updated copy of the program logic item may include, for example, analyzing the query received by the system at stage 210. For example, the system may analyze context data associated with the query to determine (i) an identifier of the application that is installed on the client device and used to input the query, (ii) a version of the application that is installed on the client device and used to input the query, (iii) an API version that is installed on the client device and used to generate the query, transmit the query, or both, (v) one or more client device settings, (vi) a client device version, (vii) a location of the client device, (viii) whether the client device is moving, (ix) one or more program logic versions cached by the client device, (x) or a combination thereof. By way of example, if the system determines that the program logic item required by the unassembled content item and installed on the client device is out of date (e.g., prior version), then the system may determine that the client device requires an updated copy of the program logic item. Alternatively, if the system determines that the program logic item required by the unassembled content item and installed on the client device is current (e.g., current version), then the system may determine that the client device does not require an updated copy of the program logic item. If the system determines that the client device requires an updated copy of a program logic item to render the unassembled content item obtained at stage 212, the process continues to stage 214.

At stage 214, the system obtains a program logic item from a program logic database using the program logic type that is associated with the unassembled content item obtained at stage 212. Obtaining a program logic item from a program logic database may include, for example, performing a search of a program logic database using the program logic type associated with the unassembled content item obtained at stage 212. The program logic database may include multiple program logic items that may be used to render unassembled content items on the user interface of an application installed on the client device. Each program logic item may include a plurality of modifiable attributes. The modifiable attributes may include, for example, layout attributes, style attributes, actions, data binding definitions, and the like. Each respective modifiable attribute may be assigned a predetermined default value. In some implementations, the default value may be determined by system operator, content provider, or another party.

At stage 215, the system configures one or more modifiable attributes of the obtained program logic item. Configuring one or more modifiable attributes of the obtained program logic may include, for example, modifying the obtained program logic item using the one or more program logic modification tags associated with the unassembled content item obtained at stage 212. Such modification may include using one or more program logic modification tags to, for example, enable or disable one or more modifiable attributes of a program logic item. Alternatively, or in addition, such modification may include using one or more program logic modification tags to set a particular value associated with a modifiable attribute of a program logic item to a particular value, setting, or state. Alternatively, or in addition, configuring one or more modifiable attributes of the obtained program logic item may include, for example, accepting the predetermined default setting of one or more modifiable attributes associated with a program logic item. In some instances, configuring modifiable attributes associated with an obtained program logic item may include a combination of modifying one or more modifiable attributes of the program logic item and accepting one or more predetermined default settings of one or more modifiable attributes of the program logic item. However, in some instances, such as when the unassembled content item identified at stage 212 is not associated with one or more program logic modification tags, configuring one or more modifiable attributes of a program logic item may include accepting all default settings of the program logic item's modifiable attributes.

At stage 216, the unassembled content item and the program logic item are added to a queue for download by the client device. Then, the system determines at stage 217 whether there is another unassembled content item that was identified at stage 211 as being responsive to the query received at stage 210. If it is determined at stage 217 that there is another unassembled content item that was identified as being responsive to the query received at stage 210, then the system returns to stage 212 and performs another iteration of stages 212 and 213, and the system will then continue performing the iteration of process 200 along one of the branches of stage 213 based on the determination made at stage 213. Alternatively, if it is determined at stage 217 that there is not another unassembled content item that was identified as being responsive to the query received at stage 210, then the system may proceed to perform stage 218.

At stage 218, the system provides unassembled content items, program logic items, or both to the client device. The particular unassembled content items, particular program logic items, or both may include those unassembled content items, program logic items, or both that were previously identified for download at stages 216, 220, or both. The queued items represent the search results identified by the system based on the received search query received at stage 210. Providing the unassembled content items, program logic items, or both to the client device by the system may include, for example, the system directly transmitting data that includes the queued items to the client device. The unassembled content items, program logic items, or both received by the client device may then be provided to the API stored on the client device.

Alternatively, the system may generate a search result message. The search result message may include a reference to a network location such as a uniform resource locator (URL) that provides the network location of a server computer storing one or more unassembled content items, one or more program logic items, or both that were previously added to the queue for download at stages 216 or 220. Then, the system may transmit the search result message to the client device which receives the search result message. The client device may provide the received search result message to an application program interface (API). Upon receipt of a search result message, the API may automatically retrieve the one or more unassembled content items and the one or more program logic items from the network location identified by the reference (e.g., URL) in the search result message. Alternatively, in other implementations, the system may transmit data that includes the unassembled content items responsive to the query directly to the client device.

In some instances, the system may determine at stage 213 that the client device does not require an updated copy of a program logic item to render the unassembled content item obtained at stage 212. For example, the system may analyze the contextual data associated with the query received at stage 210 and determine that the client device includes a program logic item required by the unassembled content item and installed on the client device is current (e.g., current version). Therefore, the system may proceed to stage 220.

At stage 220, the system can add the unassembled content item a queue for download by the client device. Then, the system determines at stage 217 whether there is another unassembled content item that was identified at stage 211 as being responsive to the query received at stage 210. If it is determined at stage 217 that there is another unassembled content item that was identified as being responsive to the query received at stage 210, then the system returns to stage 212 and performs another iteration of stages 212 and 213, and the system will then continue performing the iteration of process 200 along one of the branches of stage 213 based on the determination made at stage 213. Alternatively, if it is determined at stage 217 that there is not another unassembled content item that was identified as being response to the query received at stage 210, then the system may proceed to perform stage 218. The system may continue to iteratively perform the process 200 until the system determines whether or not the client device needs an updated copy of a program logic item for each respective unassembled content item that is responsive to the query received at stage 210.

In some implementations, the system may provide a set of unassembled content items, program logic items, or both to the client device that includes less than all of the unassembled content items and less than all program logic items added to the download queue available for display. For instance, the system may rank the unassembled content items in the download queue based on popularity (e.g., most clicks), views, highest grossing, or the like. Then, the system may then transmit only a subset of the unassembled content items to the client device, and their associated program logic items, as necessary. For example, the system may transmit only the top five unassembled content items, and their associated program logic items, as necessary to the client device.

In some implementations, the system may employ a prefetch routine that transmits an initial subset of unassembled content items, and their associated program logic items, to the client device. The client device can provide the initial subset of unassembled content items to the API, cache the initial subset unassembled content items, populate the search results array, and then begin to render a set of mobile application search results based on the initial set of unassembled content items, and their associated program logic items. During rendering of the mobile application search results, the API can monitor the number of cached unassembled content items that have not yet been rendered for display in a set of mobile application search results. Once the number of cached unassembled content items that have not yet been rendered falls below a predetermined threshold, the API can transmit another request for unassembled content items to the server as a background process.

Then the server can perform the process 200 again in the background, fetching additional content items and their associated program logic items, as necessary, while the client device is rendering a set of mobile application search results that include one or more rendered and assembled content items based on the initial set of unassembled content items received from the server. This pre-fetch routine of transmitting an initial subset of search results responsive to subsequent background query can be performed to reduce latency and eliminate the appearance of the "pop-in" effect of a content item in a set of mobile application search results rendered on an interface of mobile application in a native programming language. Such a benefit occurs because the client device can begin to render a set of mobile application search results using the initial set of unassembled content items and their associated program logic items without waiting for execution of the query to continue, without waiting for all of the unassembled content items responsive to the query to be downloaded to the client device, or the like.

The system may be configured to store a placeholder that marks a position in the ranked unassembled content items. The placeholder may be used to determine, for example, which unassembled content items were provided to the client device and which were not provided to the client device. For example, a placeholder inserted after the fifth unassembled content item may indicate that unassembled content items after the fifth ranked unassembled content item have not yet been made available for display to the client device.

At a subsequent point in time, the client device may determine that the client device is approaching the last content item identifier in the search results array. In response to such a determination, the client device may resubmit the query for unassembled items. Then, in response, the system may process the query, analyze the context information associated with the query, and make another incremental set of unassembled content items, and their corresponding program logic items, as necessary, available for download to the client device. For example, the system may make the next five unassembled content items, and their respective program logic items, as necessary, available for download to the client device.

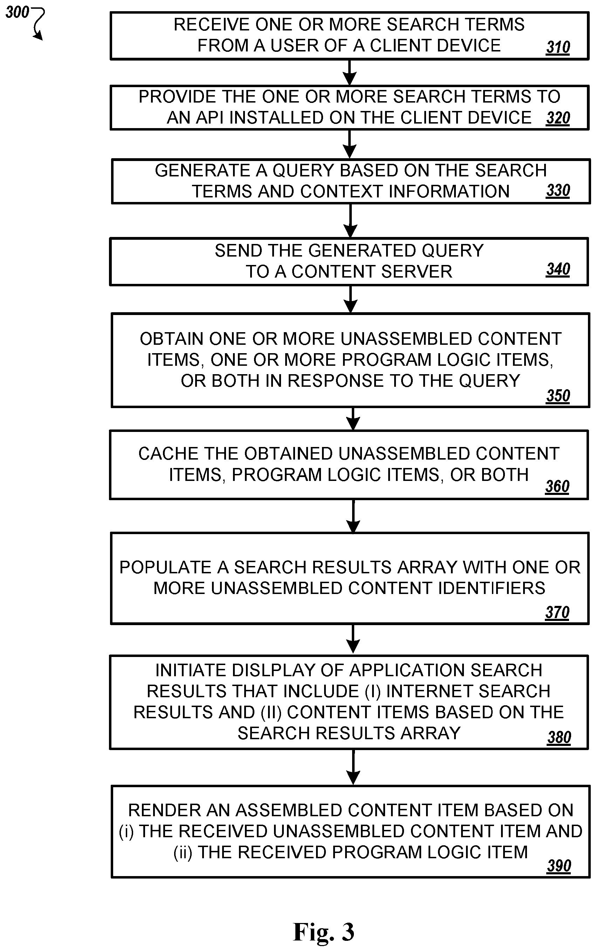

FIG. 3 is a flowchart of a process for using a client device to render unassembled content using program logic. The process 300 will be described as being performed by a client device of system 100.

The client device receives 310 one or more search terms input by a user of the user device into a search field of a mobile application running on the user device. The client device may provide the one or more search terms received at stage 310 to an API installed on the client device.

The API installed on the client device may generate a query based on the search terms provided to (and received by) the API at stage 320 and context information. The context information may include, for example, (i) an identifier of the application that is installed on the client device and used to input the query, (ii) a version of the application that is installed on the client device and used to input the query, (iii) an API version that is installed on the client device and used to generate the query, transmit the query, or both, (v) one or more client device settings, (vi) a client device version, (vii) a location of the client device, (viii) whether the client device is moving, (ix) one or more program logic versions cached by the client device, (x) or a combination thereof. In some implementations, the API may encrypt the query into a token using a hash algorithm. The API may then send 340 the query to a content server to request content via one or more networks such as a LAN, a WAN, a cellular network, the Internet, or a combination thereof.

The API installed on the client device may obtain 350 one or more unassembled content items, one or more program logic items, or a combination of both in response to the query. For example, in some implementations, the content server may automatically transmit data directly to the client device that includes one or more unassembled content items, one or more program logic items, or a combination of both that are responsive to the search query sent by the client device at stage 340.

Alternatively, for example, in another implementation, the API may receive a search result message from the content server in response to the query sent at stage 340 that includes a reference to a predetermined network location that stores one or more unassembled content items, one or more program logic items, or both. The API may access the search result message and obtain the reference to a predetermined network location that stores one or more unassembled content items, one or more program logic items, or both. The reference may include, for example, a uniform resource locator. The API may initiate a network connection to the network location specified by the reference in the search result message. Then, the API can download one or more unassembled content items, one or more program logic items, or a combination of both from the predetermined network location specified by the reference in the search result message.

The API caches the one or more unassembled content items, the one or more program logic items, or both that were obtained at stage 350. Caching the one or more unassembled content items, the one or more program logic items, or both may include, for example, storing the one or more unassembled content items, the one or more program logic items, or both in a cache memory. The cache memory may include a high performance memory device that allows fast access to the unassembled content items, program logic items, or both stored in the cache. In some implementations, the API may assign a content identifier to each respective unassembled content item when the unassembled content item, program logic item, or both are stored in the cache, or at some point prior to storing the unassembled content item, the program logic item, or both are stored in the cache. The content identifier may be used to retrieve the unassembled content item from the cache. In some implementations, the API may also assign an identifier to the program logic item. Alternatively, however, a program logic item for a particular unassembled content item may be identified using the program logic type that is associated with each unassembled content item. In yet other implementations, the API may extract, or otherwise obtain, an identifier from each respective unassembled content items, the program logic item, or both that was previously associated with the respective unassembled content item, the program logic item, or both.

Once cached, the unassembled content items, program logic items, or both may be accessed quickly, without the need to wait for the cached unassembled content items, program logic items, or both to be downloaded from a remote network location until such items need to be updated to a new version. The advantage of caching the unassembled content items, program logic items, or both, thus reduces the drain on network bandwidth and reduces latency relative to systems not using the content search and rendering systems disclosed herein. The reduction in latency is the rendering of content items thereby helps to avoid the "pop-in" effect that can occur when rendering content items in a graphical user interface of a mobile application.

The mobile application maintained on the client device maintains a search result array. The search results array may include a plurality of ordered fields that establish an order that mobile application search results will be provided. The API installed on the client device is configured to populate 370 one or more fields of the search results array with one or more unassembled content identifiers. Populating the search results array with one or more unassembled content identifiers may include, for example, inserting an unassembled content identifier into a field of the search results array. The API may also insert an identifier of one or more internet search results into respective fields of the search results array.

Though the API may insert particular unassembled content identifiers into the search results array, the present disclosure need not be so limited. For instance, in some implementations, the API may merely identify a particular field of the search results array as a content field without inserting an unassembled content identifier into the field. Such identification of a particular field may designate the field to receive an unassembled content item identifier for a content item that may be downloaded at a later point in time after an initial mobile application search results interface has been rendered on the mobile device. A field in a search results array that is designated to receive an unassembled content item at a later point in time may function to support deferred rendering of an unassembled content item, as described further below.

In some implementations, the placement of internet search results and unassembled content identifiers in the search results array may be predetermined. For example, the mobile application may be configured to alternate internet search result identifiers and unassembled content identifiers in the search results array. Alternatively, for example, the mobile application may be configured to insert one unassembled content identifier into the search results array after every fourth internet search result identifier inserted into the search results array. Other configurations of internet search result identifiers and unassembled content identifiers may be used to populate the search results array.

In other implementations, the placement of an unassembled content identifier may be based on a similarity score associated with the content item identified by the unassembled content identifier and the content item identified by one or more internet search results that would be adjacent to the unassembled content identifier when the unassembled content identifier is inserted into the search results array. That is, the API may insert a content identifier next to search results that are associated with content that is sufficiently similar to the content associated with the unassembled content identifier. If the content associated with a particular unassembled content identifier is determined to satisfy a predetermined similarly threshold with respect to content associated with one or more search results, then the API may insert the content identifier into the search results array adjacent to one (or a pair) of search results that point to content that is sufficiently similar unassembled content item.

A mobile application running on the client device may initiate 380 display of a mobile application search results interface that include (i) internet search results, and (ii) assembled content items based on the search results array. For instance, the mobile application may access the search results array field-by-field, and display an entry on the mobile application search results interface based on each respective field of the search results array. If, for example, the accessed field is associated with an internet search result, the mobile application may display an interactive uniform resource locator that references the internet resource (e.g., web page) associated with the internet search result.

Alternatively, if, for example, the accessed field is associated with a content identifier that corresponds to a particular unassembled content item stored in a cache maintained by the mobile device, the mobile application may request the content identifier and the program logic item associated with the content identifier from the cache. If there is a cache hit, and the content identifier and the program logic item are found in the cache, then the client device may continue performing 300 at stage 390. Alternatively, if there is a cache miss, and the unassembled content item or the program logic item are not found in the cache, then the client device may request the unassembled content item, associated program logic item, or both from the content server.

The example of a client device initiating display of a mobile application search results interface at stage 380 is described as providing a search results interface that includes (i) internet search results, and (ii) assembled content items. However, the present disclosure need not be so limited. For instance, the internet search results interface initiated at stage 380 may include only assembled content items without any internet search results. Such a scenario may arise if, for example, each field of the search results array is populated with only unassembled content identifiers and not any internet search result identifiers.

In the event of a cache hit, the client device may provide the unassembled content item and its associated program logic item to a content assembler installed on the mobile device. The content assembler renders 390 the received unassembled content item in a native programing language of the mobile application using the received program logic item. Rendering of the unassembled content item includes, e.g., formatting the unassembled content item based on the settings of one or more modifiable attributes of the program logic item. This includes, for example, modifying the style, layout, and actions associated with the unassembled content item as specified by the program logic item.

Beyond formatting the unassembled content item, the content assembler uses the program logic item to build a native view. For example, the content assembler can use data binding definitions to map the unassembled content item to the mobile application's user interface elements. The defined native view results in the generation of a reusable data binding map that can be reused for other unassembled content items that use the same template. With a view already established, additional unassembled content items can be rendered more efficiently, thereby reducing latency and reducing the potential for a "pop-in" effect. The output of the content assembler is a fully assembled content item based on the unassembled content item that has been modified using the features set forth in the program logic item that were defined by both the content provider and the operator of system, as described above. The client device may cycle through each entry in the search results array and render each entry in the list of search results as described above.

A user may interact with the mobile application search result list of internet search results and assembled content items provided via the graphical user interface of a mobile application by scrolling through search results. Though portions of the mobile application search result list will scroll out of the display and new portions of the mobile application search result list will scroll onto the display, the original order of internet search results will be preserved using the search results array. The mobile application will render unassembled content items, as necessary, by using the content identifier encountered in the search result array to retrieve unassembled content items and associated program logic from the cache, and then use the content assembler to render the unassembled content item based on the program logic item. In some instances, in addition to performance gains achieved using the cache, additional performance gains may be achieved by using reusable views.

In some implementations, as the user scrolls through the search results list, the mobile application may encounter a field of the search results array that is designated as a placeholder for a content item that has not yet been populated with an unassembled content identifier. Such a placeholder field in the search results array may not be populated yet because the content server has not yet completed execution of the query sent at stage 340. In such instances, the mobile application may skip the empty placeholder entry in the search results array when encountered during a user scroll action, and provide the next entry in the search results array. Then, once execution of the query is completed and results are received by the API installed on the client device, the client device may insert an unassembled content item identifier into the placeholder field in the search results array. Then, if the user's scrolling action results in the mobile application coming across the populated placeholder field, the client device can render the unassembled content item into an assembled content item for display using the unassembled content item identifier stored in the placeholder entry to request an unassembled content item and program logic item from the cache, and then render the unassembled content item in the native programming language of the mobile application using the program logic item.

In some implementation, the client device may obtain a message from the system that the content server has exhausted search options and has identified all possible content items responsive to the query sent at stage 340. In such instances, the mobile application may treat the search results array as if the search results array is circular. For instance, the mobile application may repeatedly cycle through the search results array as a user scrolls through search results in order to create the illusion of an endless stream of assembled content items being rendered for display on the user interface of the mobile application.

Embodiments of the subject matter, the functional operations and the processes described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible nonvolatile program carrier for execution by, or to control the operation of, data processing apparatus. Alternatively, or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" encompasses all kinds of apparatus, devices, and machines for processing data, including by way of example a programmable processor, a computer, or multiple processors or computers. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a standalone program or as a module, component, subroutine, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Computer readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube), LCD (liquid crystal display), LED (light-emitting diode), or OLED (organic light-emitting diode) monitor, for displaying information to the user and a keyboard and a pointing device, e.g., a mouse, a trackball, or a touchscreen, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's user device in response to requests received from the web browser.

Embodiments of the subject matter described in this specification can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of what may be claimed, but rather as descriptions of features that may be specific to particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain implementations, multitasking and parallel processing may be advantageous. Other steps or stages may be provided, or steps or stages may be eliminated, from the described processes. Accordingly, other implementations are within the scope of the following claims.

## Claims

1. A method (200) performed by a data processing system (100, 130) for providing content associated with an interactive user interface (160) from a database (134) that stores unassembled content items (134a - 134d), the method comprising:
receiving (210), from an application programming interface (111) that is installed on a client device (110), a query (121) for a content item to present in the application, wherein the query (121) includes (i) one or more keywords and (ii) context information;
identifying (211), based on a search of the database (134) using the received query, an unassembled content item (134a - 134d) that is associated with (i) a program logic type (150), and (ii) one or more program logic modification tags (152), wherein the unassembled content item (134a - 134d) includes content in a pre-rendered state, and the program logic type (150) includes data which identifies a program logic item (141a - 141d) or a category of program logic items (141a - 141d) required to render an assembled version of the content item;
determining (213), based on the received query (121), whether the client device (110) requires an updated copy of a program logic item (141a - 141d) that includes instructions for rendering the assembled version of the unassembled content item (134a - 134d); and
in response to determining that the client device (110) requires an updated copy of the program logic item (141a- 141d) that includes instructions for rendering the assembled version (180, 182) of the unassembled content item (134a - 134d):
obtaining (214), based on the program logic type (150), a program logic item (141a - 141d) that includes instructions for rendering the assembled version (180, 182) of the unassembled content item (134a - 134d),
determining one or more modifiable attributes (162, 164) based upon the context information, wherein the one or more attributes (162, 164) comprise one or more attributes selected from the group consisting of:
one or more attributes of the client device (110);
one or more attributes of the mobile application installed on the client device (110); and
one or more attributes of an operating system installed on the client device (110);
modifying (215) the one or more modifiable attributes (162, 164) of the program logic item (141a - 141d) based on the one or more program logic modification tags (152), the one or more program logic modification tags (152) including data which enables or disables an attribute (162, 164) of the program logic item (141a - 141d) or sets a value of an attribute (162, 164) of the program logic item (141a - 141d) to a particular value, setting, or state; and
transmitting (216, 218), to the application programming interface (111), data (124a) that includes (i) the unassembled content item (134a - 134d), and (ii) the modified program logic that causes the client device (110) to render the assembled version (180, 182) of the content item at the client device (110) based on the one or more modifiable attributes (162, 164), in a programming language of the application using the program logic, wherein the client device (110) renders the assembled version (180, 182) of the content item based upon instructions provided in the modified program logic item.

2. The method of claim 1, further comprising:
in response to determining that the client device (110) does not require an updated copy of the program logic item (141a - 141d) that includes instructions for rendering the assembled version (180, 182) of the unassembled content item (134a - 134d), transmitting (220, 218), to the application programming interface (111), data (124a) that includes the unassembled content item (134a - 134d) to be rendered into an assembled version (180, 182) of the content item at the client device (110) in a programming language of the application using a copy of the program logic item cached locally on the client device.

3. The method of claim 1 or 2, wherein the context information includes a program logic item version identifier.

4. The method of any preceding claim, wherein modifying (215) the program logic item (141a - 141d) based on the program logic modification tags (152) includes:
enabling one or more attributes (162, 164) of the program logic item (141a - 141d) based on the program logic modification tags (152).

5. The method of any preceding claim, wherein modifying (215) the program logic item (141a - 141d) based on the program logic modification tags (152) includes:
disabling one or more attributes (162, 164) of the program logic item (141a - 141d) based on the program logic modification tags (152).

6. The method of any preceding claim, the method further comprising:
receiving, from the application programming interface (111) that is installed on the client device (110), data that is indicative of a number of user interactions with the assembled version (180, 182) of the content item.

7. The method of any preceding claim, wherein the program logic type (150) includes a program logic identifier.

8. A data processing system (100) comprising:
one or more computers (130) and one or more storage devices storing instructions that are operable, when executed by the one or more computers, to cause the one or more computers to perform operations for providing content associated with an interactive user interface (160) from a database (134) that stores unassembled content items, the operations comprising a method according to any one of claims 1 to 7.

9. A non-transitory computer-readable medium storing software comprising instructions executable by one or more computers (130) which, upon such execution, cause the one or more computers to perform operations for providing content associated with an interactive user interface (160) from a database (134) that stores unassembled content, the operations comprising a method according to any one of claims 1 to 7.

## Patentansprüche

1. Verfahren (200), das durch ein Datenverarbeitungssystem (100, 130) durchgeführt wird, zum Bereitstellen von Inhalt, der einer interaktiven Benutzeroberfläche (160) zugeordnet ist, von einer Datenbank (134), die nicht zusammengesetzte Inhaltselemente (134a - 134d) speichert, wobei das Verfahren Folgendes umfasst:
Empfangen (210), von einer Anwendungsprogrammierschnittstelle (111), die auf einer Client-Vorrichtung (110) installiert ist, einer Abfrage (121) nach einem Inhaltselement, das in der Anwendung darzustellen ist, wobei die Abfrage (121) (i) eines oder mehr Schlüsselwörter und (ii) Kontextinformationen enthält;
Identifizieren (211), basierend auf einer Suche in der Datenbank (134) unter Verwendung der empfangenen Abfrage, eines nicht zusammengesetzten Inhaltselements (134a - 134d), das (i) einem Programmlogiktyp (150) und (ii) einem oder mehreren Programmlogik-Modifikations-Tags (152) zugeordnet ist, wobei das nicht zusammengesetzte Inhaltselement (134a - 134d) Inhalt in einem vorgerenderten Zustand enthält und der Programmlogiktyp (150) Daten enthält, die ein Programmlogikelement (141a- 141d) oder eine Kategorie von Programmlogikelementen (141a-141d) identifizieren, die zum Rendern einer zusammengesetzten Version des Inhaltselements erforderlich sind;
Bestimmen (213), basierend auf der empfangenen Abfrage (121), ob die Client-Vorrichtung (110) ein aktualisiertes Exemplar eines Programmlogikelements (141a - 141d) benötigt, das Anweisungen zum Rendern der zusammengesetzten Version des nicht zusammengesetzten Inhaltselements enthält (134a - 134d); und
als Reaktion auf das Bestimmen, dass die Client-Vorrichtung (110) ein aktualisiertes Exemplar des Programmlogikelements (141a - 141d) benötigt, das Anweisungen zum Rendern der zusammengesetzten Version (180, 182) des nicht zusammengesetzten Inhaltselements (134a - 134d) enthält:
Erhalten (214), basierend auf dem Programmlogiktyp (150), eines Programmlogikelements (141a - 141d), das Anweisungen zum Rendern der zusammengesetzten Version (180, 182) des nicht zusammengesetzten Inhaltselements (134a - 134d) enthält,
Bestimmen eines oder mehrerer modifizierbarer Attribute (162, 164) basierend auf den Kontextinformationen, wobei das eine oder die mehreren Attribute (162, 164) ein oder mehrere Attribute umfassen, die aus der Gruppe ausgewählt sind, die aus Folgendem besteht:
ein oder mehrere Attribute der Client-Vorrichtung (110);
ein oder mehrere Attribute der mobilen Anwendung, die auf der Client-Vorrichtung (110) installiert ist; und
ein oder mehrere Attribute eines Betriebssystems, das auf der Client-Vorrichtung (110) installiert ist;
Modifizieren (215) des einen oder der mehreren modifizierbaren Attribute (162, 164) des Programmlogikelements (141a - 141d) basierend auf dem einen oder den mehreren Programmlogik-Modifikations-Tags (152), wobei das eine oder die mehreren Programmlogik-Modifikations-Tags (152) Daten enthalten, die ein Attribut (162, 164) des Programmlogikelements (141a - 141d) aktivieren oder deaktivieren oder einen Wert eines Attributs (162, 164) des Programmlogikelements (141a - 141d) auf einen speziellen Wert, eine spezielle Einstellung oder einen speziellen Zustand einstellen; und
Übertragen (216, 218), an die Anwendungsprogrammierschnittstelle (111), von Daten (124a), die (i) das nicht zusammengesetzte Inhaltselement (134a - 134d) und (ii) die modifizierte Programmlogik enthalten, die die Client-Vorrichtung (110) zum Rendern der zusammengesetzten Version (180, 182) des Inhaltselements auf der Client-Vorrichtung (110) basierend auf dem einen oder den mehreren modifizierbaren Attributen (162, 164) in einer Programmiersprache der Anwendung unter Verwendung der Programmlogik veranlasst, wobei die Client-Vorrichtung (110) die zusammengesetzte Version (180, 182) des Inhaltselements basierend auf Anweisungen, die im modifizierten Programmlogikelement bereitgestellt werden, rendert.

2. Verfahren nach Anspruch 1, ferner umfassend:
als Reaktion auf das Bestimmen, dass die Client-Vorrichtung (110) kein aktualisiertes Exemplar des Programmlogikelements (141a - 141d) benötigt, das Anweisungen zum Rendern der zusammengesetzten Version (180, 182) des nicht zusammengesetzten Inhaltselements (134a - 134d) enthält, Übertragen (220, 218), an die Anwendungsprogrammierschnittstelle (111), von Daten (124a), die das nicht zusammengesetzte Inhaltselement (134a - 134d) enthalten, das in eine zusammengesetzte Version (180, 182) des Inhaltselements auf der Client-Vorrichtung (110) in einer Programmiersprache der Anwendung unter Verwendung eines Exemplars des Programmlogikelements, das lokal auf der Client-Vorrichtung zwischengespeichert ist, zu rendern ist.

3. Verfahren nach Anspruch 1 oder 2, wobei die Kontextinformationen eine Versionskennung eines Programmlogikelements enthalten.

4. Verfahren nach einem vorhergehenden Anspruch, wobei das Modifizieren (215) des Programmlogikelements (141a - 141d) basierend auf den Programmlogik-Modifikations-Tags (152) Folgendes enthält:
Aktivieren eines oder mehrerer Attribute (162, 164) des Programmlogikelements (141a - 141d) basierend auf den Programmlogik-Modifikations-Tags (152).

5. Verfahren nach einem vorhergehenden Anspruch, wobei das Modifizieren (215) des Programmlogikelements (141a - 141d) basierend auf den Programmlogik-Modifikations-Tags (152) Folgendes enthält:
Deaktivieren eines oder mehrerer Attribute (162, 164) des Programmlogikelements (141a - 141d) basierend auf den Programmlogik-Modifikations-Tags (152).

6. Verfahren nach einem vorhergehenden Anspruch, wobei das Verfahren ferner Folgendes umfasst:
Empfangen, von der Anwendungsprogrammierschnittstelle (111), die auf der Client-Vorrichtung (110) installiert ist, von Daten, die eine Anzahl von Benutzerinteraktionen mit der zusammengesetzten Version (180, 182) des Inhaltselements angeben.

7. Verfahren nach einem vorhergehenden Anspruch, wobei der Programmlogiktyp (150) eine Programmlogik-Kennung umfasst.

8. Datenverarbeitungssystem (100), umfassend:
einen oder mehrere Computer (130) und eine oder mehrere Speichervorrichtungen, die Anweisungen speichern, die bei Ausführung durch den einen oder die mehreren Computer betreibbar sind, um den einen oder die mehreren Computer zu veranlassen, Vorgänge zum Bereitstellen von Inhalt, der einer interaktiven Benutzeroberfläche (160) zugeordnet ist, von einer Datenbank (134) durchzuführen, die nicht zusammengesetzte Inhaltselemente speichert, wobei die Vorgänge ein Verfahren nach einem der Ansprüche 1 bis 7 umfassen.

9. Nichtflüchtiges computerlesbares Medium, das Software speichert, die durch einen oder mehrere Computer (130) ausführbare Anweisungen umfasst, die bei einer solchen Ausführung den einen oder die mehreren Computer dazu veranlassen, Vorgänge zum Bereitstellen von Inhalt, der einer interaktiven Benutzeroberfläche (160) zugeordnet ist, von einer Datenbank (134) durchzuführen, die nicht zusammengesetzten Inhalt speichert, wobei die Vorgänge ein Verfahren nach einem der Ansprüche 1 bis 7 umfassen.

## Revendications

1. Procédé (200) exécuté par un système de traitement de données (100, 130) pour fournir un contenu associé à une interface utilisateur interactive (160) à partir d'une base de données (134) qui stocke des éléments de contenu non assemblés (134a à 134d), le procédé comprenant :
la réception (210), à partir d'une interface de programmation d'application (111) installée sur un dispositif client (110), d'une requête (121) pour un élément de contenu à présenter dans l'application, dans lequel la requête (121) comprend (i) un ou plusieurs mots-clés et (ii) des informations contextuelles ;
l'identification (211), sur la base d'une recherche dans la base de données (134) à l'aide de la requête reçue, d'un élément de contenu non assemblé (134a à 134d) qui est associé à (i) un type de logique de programme (150), et (ii) une ou plusieurs balises de modification de logique de programme (152), dans lequel l'élément de contenu non assemblé (134a à 134d) comprend un contenu dans un état pré-restitué, et le type de logique de programme (150) comprend des données qui identifient un élément de logique de programme (141a à 141d) ou une catégorie d'éléments de logique de programme (141a à 141d) requis pour restituer une version assemblée de l'élément de contenu ;
la détermination (213), sur la base de la requête reçue (121), si le dispositif client (110) requiert une copie mise à jour d'un élément de logique de programme (141a à 141d) qui comprend des instructions pour restituer la version assemblée de l'élément de contenu non assemblé (134a à 134d) ; et
en réponse à la détermination que le dispositif client (110) requiert une copie mise à jour de l'élément de logique de programme (141a à 141d) qui comprend des instructions pour restituer la version assemblée (180, 182) de l'élément de contenu non assemblé (134a à 134d) :
l'obtention (214), sur la base du type de logique de programme (150), d'un élément de logique de programme (141a à 141d) qui comprend des instructions pour restituer la version assemblée (180, 182) de l'élément de contenu non assemblé (134a à 134d),
la détermination d'un ou plusieurs attributs modifiables (162, 164) sur la base des informations contextuelles, dans lequel l'un ou plusieurs attributs (162, 164) comprennent un ou plusieurs attributs sélectionnés dans le groupe constitué de :
un ou plusieurs attributs du dispositif client (110) ;
un ou plusieurs attributs de l'application mobile installée sur le dispositif client (110) ; et
un ou plusieurs attributs d'un système d'exploitation installé sur le dispositif client (110) ;
la modification (215) de l'un ou plusieurs attributs modifiables (162, 164) de l'élément de logique de programme (141a à 141d) sur la base de l'une ou plusieurs balises de modification de logique de programme (152), l'une ou plusieurs balises de modification de logique de programme (152) comprenant des données qui activent ou désactivent un attribut (162, 164) de l'élément de logique de programme (141a à 141d) ou définissent une valeur d'un attribut (162, 164) de l'élément de logique de programme (141a à 141d) sur une valeur, un réglage ou un état particulier ; et
la transmission (216, 218), à l'interface de programmation d'application (111), de données (124a) qui comprennent (i) l'élément de contenu non assemblé (134a à 134d), et (ii) la logique de programme modifiée qui amène le dispositif client (110) à restituer la version assemblée (180, 182) de l'élément de contenu au niveau du dispositif client (110) sur la base de l'un ou plusieurs attributs modifiables (162, 164), dans un langage de programmation de l'application utilisant la logique de programme, dans lequel le dispositif client (110) restitue la version assemblée (180, 182) de l'élément de contenu sur la base d'instructions fournies dans l'élément de logique de programme modifié.

2. Procédé de la revendication 1, comprenant en outre :
en réponse à la détermination que le dispositif client (110) ne requiert pas une copie mise à jour de l'élément de logique de programme (141a à 141d) qui comprend des instructions pour restituer la version assemblée (180, 182) de l'élément de contenu non assemblé (134a à 134d), la transmission (220, 218), à l'interface de programmation d'application (111), de données (124a) qui comprennent l'élément de contenu non assemblé (134a à 134d) à restituer dans une version assemblée (180, 182) de l'élément de contenu au dispositif client (110) dans un langage de programmation de l'application utilisant une copie de l'élément de logique de programme mis en cache localement sur le dispositif client.

3. Procédé selon la revendication 1 ou 2, dans lequel les informations contextuelles comprennent un identifiant de version d'élément de logique de programme.

4. Procédé selon l'une quelconque des revendications précédentes, dans lequel la modification (215) de l'élément de logique de programme (141a à 141d) basé sur les balises de modification de logique de programme (152) comprend :
l'activation d'un ou plusieurs attributs (162, 164) de l'élément de logique de programme (141a à 141d) sur la base des balises de modification de logique de programme (152).

5. Procédé selon l'une quelconque des revendications précédentes, dans lequel la modification (215) de l'élément de logique de programme (141a à 141d) sur la base des balises de modification de logique de programme (152) comprend :
la désactivation d'un ou plusieurs attributs (162, 164) de l'élément de logique de programme (141a à 141d) sur la base des balises de modification de logique de programme (152).

6. Procédé selon l'une quelconque des revendications précédentes, le procédé comprenant en outre :
la réception, depuis l'interface de programmation d'application (111) qui est installée sur le dispositif client (110), de données indiquant un certain nombre d'interactions d'utilisateur avec la version assemblée (180, 182) de l'élément de contenu.

7. Procédé selon l'une quelconque des revendications précédentes, dans lequel le type de logique de programme (150) comprend un identificateur de logique de programme.

8. Système de traitement de données (100) comprenant :
un ou plusieurs ordinateurs (130) et un ou plusieurs dispositifs de stockage stockant des instructions qui sont utilisables, lorsqu'elles sont exécutées par l'un ou plusieurs ordinateurs, pour amener l'un ou plusieurs ordinateurs à effectuer des opérations pour fournir un contenu associé à une interface utilisateur interactive (160) à partir d'une base de données (134) qui stocke des éléments de contenu non assemblés, les opérations comprenant un procédé selon l'une quelconque des revendications 1 à 7.

9. Logiciel de stockage sur support lisible par ordinateur non transitoire comprenant des instructions exécutables par un ou plusieurs ordinateurs (130) qui, lors d'une telle exécution, amènent l'un ou plusieurs ordinateurs à effectuer des opérations pour fournir un contenu associé à une interface utilisateur interactive (160) à partir d'une base de données (134) qui stocke un contenu non assemblé, les opérations comprenant un procédé selon l'une quelconque des revendications 1 à 7.
